# FASCICULE DE BREVET EUROPEEN

(11) **EP 3 835 645 B1**
(45) Date de publication et mention de la délivrance du brevet: **24.11.2021**
(21) Numéro de dépôt: 20209508.9
(22) Date de dépôt: 24.11.2020
(51) Int. Cl.: F16P 3/14

(54) **DÉTECTEUR DE SÉCURITÉ ET SYSTÈME DE DÉTECTION DE SÉCURITÉ INCLUANT LEDIT DÉTECTEUR DE SÉCURITÉ**
SICHERHEITSDETEKTOR UND SICHERHEITSDETEKTIONSSYSTEM, DAS DIESEN SICHERHEITSDETEKTOR UMFASST
SAFETY DETECTOR AND SAFETY DETECTION SYSTEM INCLUDING SAID SAFETY DETECTOR

(30) Priorité: 12.12.2019 FR 1914257
(43) Date de publication de la demande: 16.06.2021
(73) Titulaire: Schneider Electric Industries SAS, 92500 Rueil-Malmaison (FR)
(72) Inventeur: LEYX, Patrick, 16000 Angoulême (FR); DESCHAMPS, Christophe, 38400 Saint Martin d'Heres (FR)
(74) Mandataire: van Buul, Bastiaan Richard Marinus

(56) Documents cités:
- EP-A1- 2 667 266
- DE-A1-102005 014 122
- DE-A1-102008 060 010

## Description

### Domaine technique de l'invention

La présente invention se rapporte à un détecteur de sécurité et à un système de détection de sécurité comprenant ledit détecteur. L'invention concerne également un procédé de commande mis en œuvre dans ledit détecteur de sécurité.

### Etat de la technique

Il existe différents types de détecteur de sécurité. Il peut par exemple prendre la forme d'une barrière lumineuse de sécurité, d'un interrupteur de sécurité à câble de traction ou d'un détecteur de sécurité dit sans contact. Ce dernier est un dispositif sans contact constitué d'un capteur (également appelé "lecteur") contrôlé par microcontrôleur et d'un transpondeur (également appelé "actionneur codé").

Un détecteur de sécurité peut comporter deux sorties de sécurité redondantes (appelés sorties OSSD pour "Output Signal Switching Device"). Lorsque ces sorties sont à l'état fermé, l'application protégée par le détecteur de sécurité peut fonctionner. A titre d'exemple, dans le cas d'un détecteur de sécurité sans contact, le capteur est installé sur une partie fixe d'un dispositif de protection (par exemple le montant de la porte d'accès à une zone dangereuse) d'une installation à protéger, et le transpondeur sur une partie mobile du dispositif de protection.

Il n'y a aucun contact entre le transpondeur et le capteur. L'emploi d'une technologie de radiofréquence (RFID) permet la communication entre le capteur et le transpondeur. Le capteur et le transpondeur sont préalablement appairés, par exemple lors de la fabrication, et le capteur charge un code unique dans le transpondeur avec lequel il sera vendu. Le code numérique enregistré est la "clé" unique acceptée par le capteur appairé.

Lorsque le transpondeur entre dans le champ de radiofréquence généré par le capteur, le capteur détecte le transpondeur et lit les données dans la mémoire du transpondeur.

Si le code du transpondeur demandé par le capteur est correct, les deux sorties de sécurité redondantes du capteur passent à l'état fermé (ci-après état ON), ce qui signifie que le dispositif de protection de l'installation est fermé et que la machine peut fonctionner.

Si le transpondeur sort du champ généré par le capteur (par exemple lors de l'ouverture de la porte de la zone dangereuse à protéger), les deux sorties de sécurité redondantes du capteur passent à l'état ouvert (ci-après état OFF) afin d'arrêter la machine.

Certains des détecteurs de sécurité décrits ci-dessus sont par ailleurs conçus pour fonctionner de manière autonome, c'est-à-dire que leurs deux sorties de sécurité sont connectées directement à des contacteurs munis de contacts mécaniques, sans relais intermédiaire, ni contrôleur ou automate de sécurité. La connectique disponible sur les détecteurs de sécurité est en règle générale un connecteur de type M12 à huit broches.

En règle générale, un détecteur de sécurité peut disposer de deux modes de fonctionnement. Appliqués à un détecteur de sécurité de type sans contact, ces deux modes de fonctionnement sont les suivants :
Dans un premier mode de fonctionnement dit à démarrage automatique, le capteur est dans un état appelé RUN après un démarrage sans intervention de l'opérateur, tant que le transpondeur appairé est présent dans la zone de détection du capteur. Lors de sa mise sous-tension, le capteur passe ainsi par une phase d'initialisation, au cours de laquelle ses sorties de sécurité sont à l'état OFF. Si aucun défaut n'est détecté et que le transpondeur est dans la zone de détection du capteur, le détecteur passe automatiquement dans cet état RUN et les deux sorties de sécurité passent à l'état ON. Ensuite, si le transpondeur sort de la zone de détection du capteur, le capteur passe de l'état RUN à l'état STOP et les deux sorties de sécurité sont commutées à l'état OFF. Il reste dans cet état STOP jusqu'à ce que le transpondeur appairé entre à nouveau dans la zone de détection (sans détection de défaut). Dans ce dernier cas, le capteur repasse ensuite automatiquement de l'état STOP à l'état RUN et les deux sorties de sécurité peuvent commuter à l'état ON.
Dans un deuxième mode de fonctionnement dit à démarrage manuel, lors de sa mise sous tension, le capteur passe par une phase d'initialisation, au cours de laquelle ses sorties de sécurité sont à l'état OFF. Si aucun défaut n'est détecté à l'issu des auto-tests, il passe à l'état appelé START/RESTART (c'est-à-dire Démarrage/Redémarrage). Pour passer à l'état RUN et faire passer ses sorties de sécurité à l'état ON, le transpondeur appairé doit se trouver dans la zone de détection, sans aucun défaut détecté, et l'opérateur doit actionner un bouton-poussoir de démarrage et le relâcher (démarrage surveillé).

Si le transpondeur sort de la zone de détection lorsque le capteur est à l'état RUN, le capteur passe automatiquement à l'état STOP et ses sorties de sécurité passent de l'état ON à l'état OFF. Si le transpondeur appairé entre à nouveau dans la zone de détection (et si aucun défaut n'est détecté), le capteur repasse dans l'état START/RESTART et les sorties de sécurité du capteur restent à l'état OFF jusqu'à l'actionnement du bouton-poussoir.

Les détecteurs de sécurité à fonctionnement autonome comportent une boucle externe, appelée surveillance EDM (pour "External Device Monitoring") permettant de contrôler que les appareils de commutation tels que les contacteurs répondent correctement aux sorties de sécurité du détecteur.

La boucle de type EDM surveille les contacteurs externes reliés aux deux sorties de sécurité du détecteur. Pour cela, elle surveille des contacts normalement fermés ("Normally Closed" - NC) de ces contacteurs externes. Si la boucle externe n'est pas fermée, le détecteur ne doit pas activer ses sorties de sécurité.

Aujourd'hui, il peut être souhaitable de venir raccorder un dispositif d'arrêt d'urgence à un détecteur de sécurité de type autonome tel que décrit ci-dessus, ceci afin d'y ajouter une fonction de sécurité supplémentaire. Cependant, dans sa version autonome, c'est-à-dire sans l'emploi d'un bloc logique de sécurité, l'ajout de la fonction arrêt d'urgence peut s'avérer complexe car le détecteur ne comporte que huit bornes électriques. Classiquement, les bornes du détecteur sont câblées de la manière suivante :
- Deux bornes d'alimentation sont connectées à une alimentation ;
- Deux bornes des sorties de sécurité sont connectées chacune en redondance à un contacteur de l'application ;
- Une ou deux bornes de la fonction de surveillance EDM sont reliées à la boucle externe.

Il ne reste ainsi que deux ou trois bornes disponibles. Or pour connecter un dispositif d'arrêt d'urgence à deux contacts redondants, quatre bornes supplémentaires sont nécessaires. Dans sa configuration classique, le détecteur n'est donc pas adapté pour être associé à un dispositif d'arrêt d'urgence, tout en conservant ses fonctionnalités actuelles.

Le document EP2667266 A1 divulgue un système de détection sécurisée intégrant des fonctions de diagnostic.

Le but de l'invention est donc de proposer un détecteur de sécurité adapté pour être associé à un dispositif d'arrêt d'urgence, dans une configuration à uniquement huit bornes de connexion et une solution permettant d'associer un dispositif d'arrêt d'urgence à un tel détecteur de sécurité.

La solution de l'invention présente notamment un intérêt lorsque le détecteur de sécurité est de type autonome, c'est-à-dire comportant une intelligence intégrée suffisante pour commander directement les contacteurs de la machine, sans passer par un bloc logique de sécurité.

### Exposé de l'invention

Ce but est atteint par un détecteur de sécurité comprenant un module de détection configuré pour lire en entrée un signal de commande, ledit détecteur comportant deux bornes d'alimentation, une première entrée de contrôle et une première sortie de contrôle, une première sortie de sécurité et une deuxième sortie de sécurité, et une première borne libre et une deuxième borne libre, ledit détecteur comportant également :
- Une deuxième entrée de contrôle connectée sur la première borne libre et une deuxième sortie de contrôle connectée sur la deuxième borne libre,
- Un module de test configuré pour appliquer une première séquence de test comprenant une désactivation de la première sortie de contrôle, un test d'une boucle de démarrage connectée entre la deuxième sortie de contrôle et la première entrée de contrôle et/ou une deuxième séquence de test comprenant une désactivation de la deuxième sortie de contrôle, un test d'une boucle de démarrage connectée entre la première sortie de contrôle et la deuxième entrée de contrôle.

Selon une réalisation particulière, le module de test est configuré pour effectuer une troisième séquence de test comprenant une activation de la deuxième sortie de contrôle et une lecture de l'état de la deuxième entrée de contrôle.

Selon une autre réalisation particulière, le module de test est configuré pour effectuer une quatrième séquence de test comprenant une lecture de l'état de la première sortie de contrôle et de l'état de la deuxième sortie de contrôle.

Selon une autre réalisation particulière, le détecteur comporte une unité de commande et de traitement configurée pour exécuter ledit module de test.

Selon une autre réalisation particulière, l'unité de commande et de traitement est configurée pour exécuter :
- Un module de lecture de l'état de chaque entrée de contrôle ;
- Un module de détermination d'un état de fonctionnement tenant compte de l'état de ses entrées de contrôle ;
- Un ou plusieurs modules de commande de ses sorties de sécurité et de ses sorties de contrôle, selon l'état de fonctionnement déterminé.

Selon une variante de réalisation, le détecteur de sécurité peut être de type sans contact et comporte :
- Un capteur et un transpondeur appairé audit capteur,
- Le signal de commande est modifié lorsque ledit transpondeur est présent dans une zone de détection du capteur.

Selon une autre variante de réalisation, le détecteur de sécurité peut être de type barrière lumineuse, le signal de commande étant modifié par passage à travers ladite barrière lumineuse.

Selon une autre variante de réalisation, le détecteur de sécurité peut être de type à actionnement par câble, le signal de commande étant modifié par traction dudit câble.

L'invention concerne également un système de détection de sécurité, comprenant un détecteur de sécurité tel que défini ci-dessus, un dispositif d'arrêt d'urgence à deux contacts redondants et une boucle de démarrage, ledit système étant caractérisé en ce que :
- La boucle de démarrage est connectée entre la première sortie de contrôle et la deuxième sortie de contrôle du détecteur de sécurité ;
- Un premier contact redondant du dispositif d'arrêt d'urgence est connecté entre la première entrée de contrôle et la première sortie de contrôle et le deuxième contact redondant du dispositif d'arrêt d'urgence est connecté entre la deuxième entrée de contrôle et la deuxième sortie de contrôle.

Selon une réalisation particulière, la boucle de démarrage comporte un bouton-poussoir de démarrage.

Selon une autre réalisation particulière, la boucle de démarrage comporte deux contacts normalement fermés de deux contacteurs de commande d'une installation à commander.

L'invention concerne également un procédé de commande mis en œuvre dans un détecteur de sécurité employé dans un système de détection de sécurité tel que défini ci-dessus, ledit procédé comportant une première séquence de test qui comporte des étapes :
- Désactivation de la première sortie de contrôle du détecteur ;
- Test de l'état de la boucle de démarrage en activant la deuxième sortie de contrôle et en lisant l'état de la première entrée de contrôle du détecteur ;

Et/ou une deuxième séquence de test qui comporte des étapes de :
- Désactivation de la deuxième sortie de contrôle du détecteur ;
- Test de l'état de la boucle de démarrage en activant la première sortie de contrôle et en lisant l'état de la deuxième entrée de contrôle du détecteur.

Selon une réalisation particulière, l'étape de test est mise en œuvre plusieurs fois tant que la première entrée de contrôle ne devient pas active lors de ladite première séquence de test et/ou tant que la deuxième entrée de contrôle ne devient pas active lors de la deuxième séquence de test.

Selon une autre réalisation particulière, le procédé comporte une étape de démarrage par activation des sorties de sécurité et une étape de réactivation de la première sortie de contrôle pour la première séquence de test.

Selon une autre réalisation particulière, le procédé comporte une étape de démarrage par activation des sorties de sécurité et une étape de réactivation de la deuxième sortie de contrôle pour la deuxième séquence de test.

Selon une réalisation particulière, le procédé comporte, après ladite étape de démarrage, une étape de surveillance du premier contact redondant du dispositif d'arrêt d'urgence entre la première entrée de contrôle et la première sortie de contrôle et de surveillance du deuxième contact redondant du dispositif d'arrêt d'urgence entre la deuxième entrée de contrôle et la deuxième sortie de de contrôle.

L'invention concerne également l'utilisation du système de détection de sécurité tel que défini ci-dessus pour surveiller le démarrage d'une installation électrique protégée par un dispositif comprenant une partie fixe sur laquelle est fixé un capteur du détecteur de sécurité et une partie mobile sur laquelle est fixé un transpondeur du détecteur de sécurité.

### Brève description des figures

D'autres caractéristiques et avantages vont apparaître dans la description détaillée qui suit faite en regard des dessins annexés dans lesquels :
[Fig.1A]
[Fig.1B]

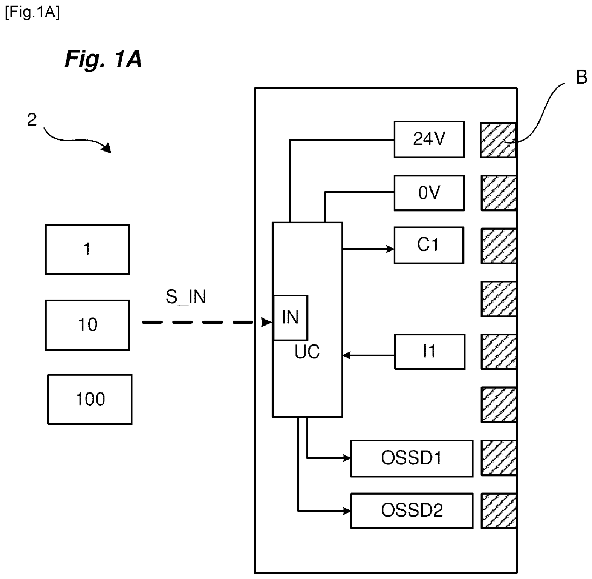

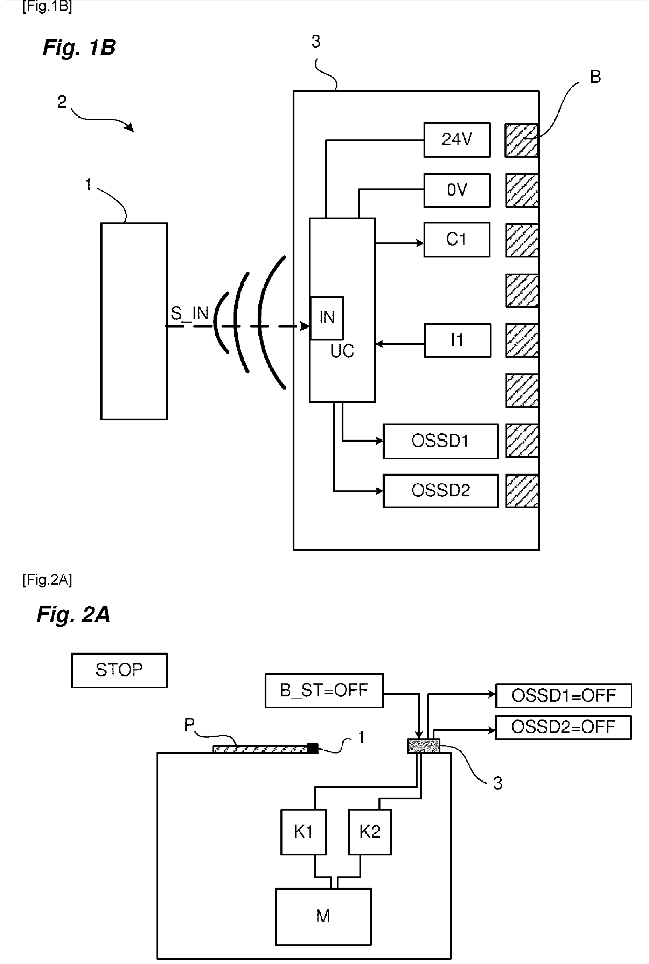

   - La figure 1A représente de manière schématique l'architecture d'un détecteur de sécurité classique et la figure 1B représente de manière schématique l'architecture d'un détecteur de sécurité sans contact doté d'un capteur et d'un transpondeur ;
[Fig.2A]
[Fig.2B]
[Fig.2C]
   - Les figures 2A à 2C illustrent le principe de fonctionnement d'un détecteur de sécurité sans contact employé dans la protection d'une installation ;
[Fig.3]

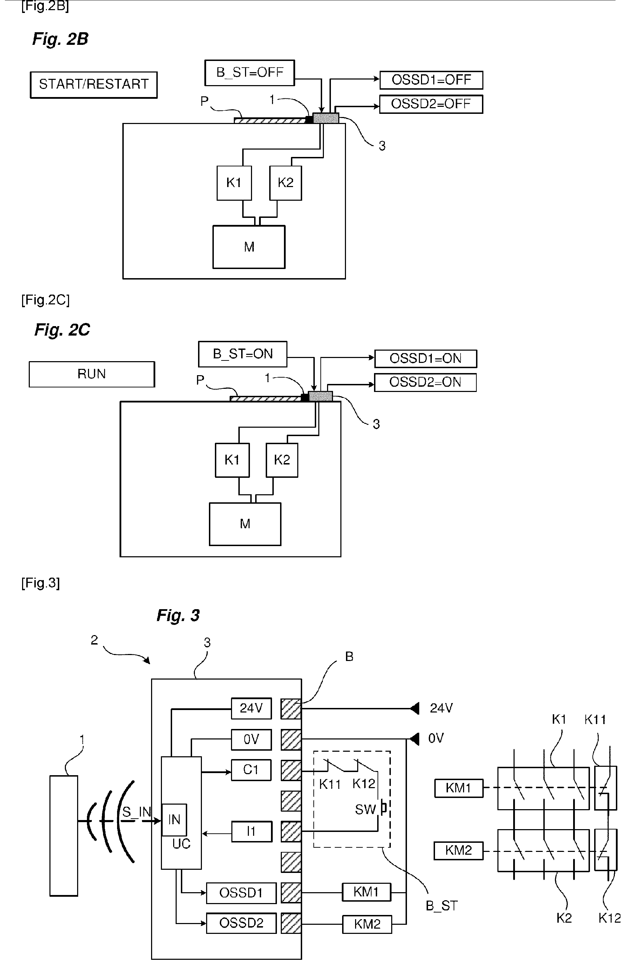

   - La figure 3 représente une architecture classique de câblage du capteur d'un détecteur de sécurité sans contact ;
[Fig.4]

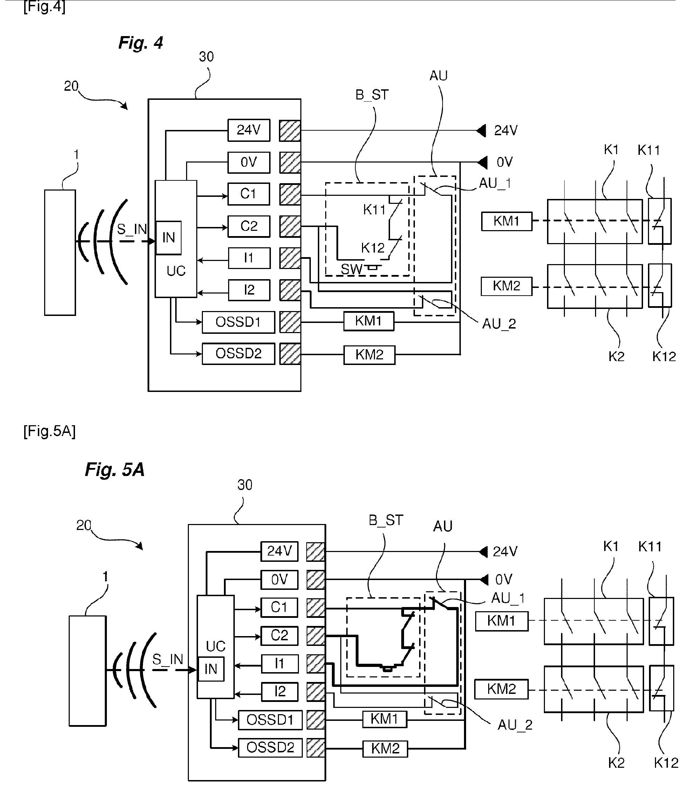

   - La figure 4 représente le principe de câblage du système de détection de sécurité de l'invention ;
[Fig.5A]
[Fig.5B]

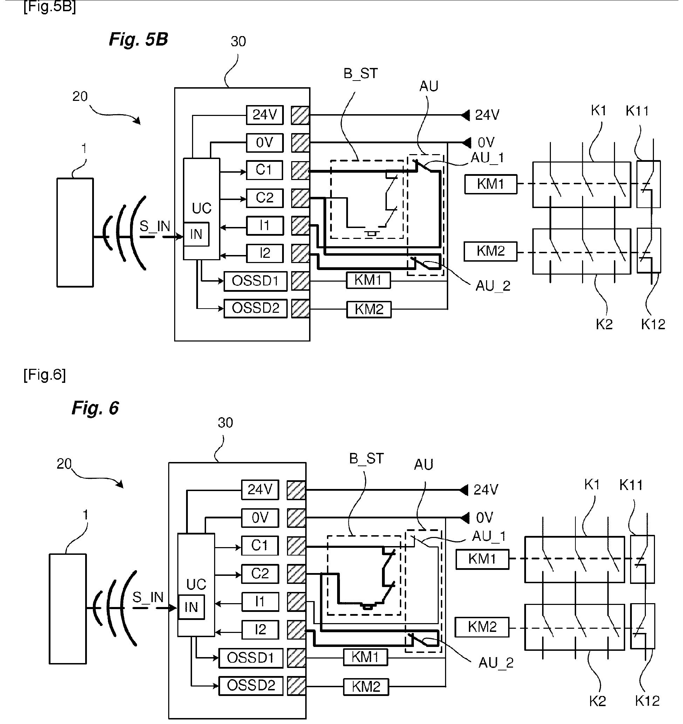

   - Les figures 5A et 5B illustrent le principe de fonctionnement du système de l'invention ;
[Fig.6]
   - La figure 6 illustre le principe d'un test alternatif ou complémentaire à celui illustré par la figure 5A.

### Description détaillée d'au moins un mode de réalisation

Dans la suite de la description, on définit l'état OFF comme l'état désactivé ou ouvert d'une entrée ou d'une sortie du détecteur de sécurité et l'état ON comme l'état activé ou fermé d'une entrée ou d'une sortie du détecteur de sécurité.

De manière connue, l'état ON d'une sortie ou d'une entrée est définie par la création d'un potentiel électrique non nul sur une borne électrique associée à la sortie ou à l'entrée et l'état OFF d'une sortie ou d'une entrée est définie par une absence de potentiel électrique sur la borne électrique associée à la sortie ou à l'entrée.

De manière connue, une entrée ou une sortie se matérialise par un ou plusieurs transistors, l'entrée étant lue par une unité de commande et de traitement et une sortie étant commandée à l'ouverture (état OFF) ou à la fermeture (état ON) par un signal provenant de l'unité de commande et de traitement.

L'état de chaque sortie peut être indiqué par un voyant lumineux.

En référence à la figure 1A, un détecteur 2 de sécurité comporte en règle générale uniquement huit bornes électriques de connexion qui seront détaillées ci-dessous.

Le détecteur 2 comporte classiquement au moins un module de détection IN d'un signal de commande S_IN généré en entrée. Selon le type de détecteur, le signal de commande S_IN peut être modifié par actionnement ou relâchement d'un câble 10, par coupure ou non du faisceau d'une barrière lumineuse 100 ou par l'absence ou la présence d'un transpondeur 1 dans une zone de détection du capteur 2 lorsqu'il s'agit d'un détecteur de sécurité sans contact.

Le détecteur 2 comporte deux sorties de sécurité redondantes, référencées OSSD1 et OSSD2, disponibles sur deux bornes de sortie de sécurité du détecteur.

Il comporte deux bornes d'alimentation électrique (0V et 24V) destinées à être connectées à une alimentation externe et sur lesquelles viennent se connecter ses circuits internes pour être alimentés en électricité.

Il comporte une entrée de contrôle I1 connectée sur une borne d'entrée de contrôle et éventuellement une sortie de contrôle C1 disponible sur une borne de sortie de contrôle.

Le capteur comporte une unité de traitement et de commande UC comportant de manière schématique :
- Le module de détection IN du signal de commande S_IN ;
- Un module de lecture de l'état de l'entrée de contrôle I1 ;
- Un module de détermination de l'état de fonctionnement du détecteur, tenant compte de l'état de ses entrées (signal S_IN et I1) ;
- Un module de commande des sorties de sécurité OSSD1, OSSD2 et de la sortie de contrôle C1, selon l'état de fonctionnement déterminé.

En référence à la figure 1B, dans le cas d'un détecteur de sécurité de type sans contact, le détecteur comporte un capteur 3 et un transpondeur 1. Le capteur 3 et le transpondeur 1 sont réalisés dans deux boîtiers distincts et indépendants, de manière à pouvoir être fixés respectivement sur une partie fixe et sur une partie mobile d'un dispositif de protection (par exemple un moyen d'accès P à une machine M dangereuse sur les figures 2A à 2C). Un tel détecteur fonctionne en employant une technologie sans contact de type RFID ("Radio-Frequency Identification"). Le transpondeur 1 est doté d'un code unique stocké dans sa mémoire. Le capteur 3 et le transpondeur 1 sont appairés. Lorsque le transpondeur 1 connu par le capteur 3 est présent dans la zone de détection du capteur 3, le signal de commande S_IN est modifié. Le module de détection IN de l'unité de traitement et de commande UC du capteur 3 lit le code stocké dans le transpondeur 1.

De manière non limitative, le principe de l'invention est décrit ci-dessous pour un détecteur de sécurité sans contact, mais on comprend aisément qu'il peut s'appliquer à tous types de détecteurs de sécurité, notamment ceux déjà décrits ci-dessus (barrière lumineuse, détecteur à câble...). En effet, comme les caractéristiques inventives sont principalement liées au module de test présent dans le détecteur et au type de câblage du détecteur, on comprend que le signal de commande S_IN présent en entrée pourra être de tous types.

Comme décrit ci-dessus, le détecteur de sécurité peut être à démarrage automatique ou à démarrage manuel surveillé. A démarrage automatique, le détecteur comporte deux modes de fonctionnement :
- Mode RUN lorsque le transpondeur 1 est présent dans la zone de détection du capteur 3 ; les sorties de sécurité sont commutées automatiquement à l'état ON après des "auto-tests" de démarrage ;
- Mode STOP lorsque le transpondeur 1 n'est plus dans la zone de détection du capteur 3 ; les sorties de sécurité sont alors commutées à l'état OFF.

A démarrage manuel surveillé, le système comporte une boucle de démarrage B_ST comprenant un bouton SW de démarrage associé au détecteur, pouvant prendre deux états distinct, ouvert (OFF) ou fermé (ON). Le détecteur 2 comporte ainsi trois modes de fonctionnement :
- Mode STOP (figure 2A) lorsque le transpondeur n'est plus dans la zone de détection du capteur (dispositif P ouvert) ; les sorties de sécurité sont donc commutées à l'état OFF ;
- Mode START/RESTART (figure 2B) lorsque le transpondeur 1 est présent dans la zone de détection (dispositif P fermé) du capteur 3 mais que la boucle de démarrage reste ouverte (bouton SW à l'état OFF) ; les sorties de sécurité sont donc à l'état OFF ;
- Mode RUN (figure 2C) lorsque le transpondeur 1 est présent dans la zone de détection du capteur 3 (dispositif P fermé) et que ce dernier détecte la fermeture de la boucle de démarrage après passage du bouton SW à l'état ON, puis son relâchement ; les sorties de sécurité sont alors commutées à l'état ON.

Dans les deux configurations (démarrage automatique ou manuel surveillé), le détecteur 2 peut comporter un module de détection de défaut, susceptible de maintenir les sorties à l'état OFF si la présence d'un défaut est détectée. Ce module ne fait pas partie de l'invention et n'est donc pas décrit dans la présente demande.

On verra que l'invention présente un intérêt lorsque le détecteur est à démarrage manuel surveillé et donc qu'une lecture de la boucle de démarrage B_ST est nécessaire.

Par ailleurs, comme décrit ci-dessus, le détecteur peut être à fonctionnement autonome, c'est-à-dire que les contacteurs K1, K2 de la machine M à commander sont connectés directement aux sorties de sécurité du capteur, sans passer par un bloc logique de sécurité. Autrement dit, dès que les sorties de sécurité passent à l'état ON, les contacteurs de commande de la machine sont commutés. De manière classique, les contacteurs K1, K2 sont connectés à la machine M en redondance, de manière à assurer l'arrêt de la machine M, même en cas de dysfonctionnement de l'un des deux contacteurs.

L'invention vise à proposer une solution de sécurité dans laquelle un dispositif d'arrêt d'urgence AU est associé à un détecteur de sécurité. L'invention consiste notamment à faire en sorte que le détecteur puisse gérer lui-même cette fonctionnalité d'arrêt d'urgence. L'invention présente un intérêt particulier lorsque le détecteur est de type autonome.

Pour rappel, un dispositif d'arrêt d'urgence AU est un dispositif qui comporte notamment un bouton de commande et aux moins deux contacts redondants AU_1, AU_2 de type NC ("Normally Closed" pour normalement fermés). Il est destiné à être connecté sur un circuit de l'installation. En cas d'anomalie, une pression sur le bouton de commande ouvre les deux contacts redondants, permettant de stopper l'installation électrique. La redondance est appliquée pour détecter toute discordance de fonctionnement.

La figure 3 représente le câblage d'un détecteur 2 de sécurité de type autonome, sans dispositif d'arrêt d'urgence. Sur cette figure 3, on a ainsi :
- Les deux bornes d'alimentation 0V, 24V reliées à une source d'alimentation externe pour lui appliquer une tension donnée (ici 24V) ;
- Les deux sorties de sécurité, désignées OSSD1 et OSSD2 (pour "Output Signal Switching Device") connectées chacune via les deux bornes de sécurité à un contacteur (bobines de commande KM1, KM2 de chaque contacteur K1, K2) de la machine M à commander ;
- Une première entrée de contrôle I1 et une première sortie de contrôle C1 connectées entre elles via une boucle de démarrage B_ST comprenant un bouton-poussoir de démarrage SW et les contacts K11, K12 normalement fermés des deux contacteurs.

Comme décrit ci-dessus, dans ce cas d'espèce, le détecteur 2 ne comporte alors que deux bornes B libres (c'est-à-dire non connectées sur une entrée ou une sortie du détecteur), ce qui est en théorie insuffisant pour y connecter les deux contacts redondants AU_1, AU_2 du dispositif d'arrêt d'urgence AU.

La figure 4 représente le principe de câblage du système comprenant le dispositif d'arrêt d'urgence AU à deux contacts redondants, un détecteur 20 de sécurité conforme à l'invention et la boucle de démarrage B_ST. Selon ce principe de câblage, les deux bornes libres sont exploitées en une deuxième entrée de contrôle I2 et une deuxième sortie de contrôle C2 présentes dans le détecteur 20. Sur la figure 4, on a ainsi :
- Les deux bornes d'alimentation 0V, 24V qui sont reliées à une source d'alimentation externe pour lui appliquer une tension donnée (ici 24V) ;
- Les deux sorties de sécurité OSSD1 et OSSD2 qui sont connectées chacune via les deux bornes de sortie de sécurité à un contacteur (bobines de commande KM1, KM2) distinct de la machine à commander ; Les deux contacteurs K1, K2 sont associés en redondance pour la commande de la machine ;
- La boucle de démarrage B_ST qui est connectée entre la première sortie de contrôle C1 et la deuxième sortie de contrôle C2 ;
- Le premier contact redondant AU_1 du dispositif d'arrêt d'urgence qui est connecté entre la première entrée de contrôle I1 et la première sortie de contrôle C1 et le deuxième contact redondant AU_2 du dispositif d'arrêt d'urgence qui est connecté entre la deuxième entrée de contrôle I2 et la deuxième sortie de contrôle C2.

A cette configuration de câblage particulière, un module logiciel de test spécifique vient s'ajouter aux autres modules logiciels décrits ci-dessus, dans l'unité de commande et de traitement UC du détecteur. Ce module de test est adapté pour gérer l'adjonction du dispositif d'arrêt d'urgence AU, tout en conservant la surveillance de la boucle de démarrage B_ST.

Avantageusement, ce module de test est avantageusement exécuté par l'unité de commande et de traitement UC lorsque le détecteur est dans le mode START/RESTART. Dans cette situation, en référence aux figures 5A et 5B, la séquence de fonctionnement suivante est exécutée par le module de test :
**Figure 5A**
   - Le module de test désactive la première sortie de contrôle C1, qui passe alors à l'état OFF ;
   - Le module de test teste l'état de la boucle de démarrage B_ST en passant la deuxième sortie de contrôle C2 à l'état ON et en lisant l'état de la première entrée de contrôle I1 (chemin marqué par des traits plus foncés sur la figure 5A) ;
   - Lorsque le bouton-poussoir de démarrage SW est enfoncé, la première entrée de contrôle I1 passe à l'état ON, signifiant que la boucle de démarrage B_ST est fermée mais aussi et que le premier contact redondant AU_ est également fermé.
**Figure 5B**
   - L'unité de commande et de traitement UC commande le passage du détecteur en mode RUN ;
   - Les deux sorties de sécurité OSSD1, OSSD2 sont commutées à l'état ON et la première sortie de contrôle C1 est repassée à l'état ON ;
   - Les états des deux contacts redondants AU_1, AU_2 du dispositif d'arrêt d'urgence AU sont surveillés par l'unité de commande et de traitement UC, respectivement entre la première entrée de contrôle I1 et la première sortie de contrôle C1 et entre la deuxième entrée de contrôle I2 et la deuxième sortie de contrôle C2 du capteur 30 (chemins marqués par des traits plus foncés sur la figure 5B).

En référence à la figure 6, en alternative ou en complément à la séquence décrite en liaison avec la figure 5A, le module de test peut également être configuré pour tester la boucle de démarrage entre la première sortie de contrôle C1 et la deuxième entrée de contrôle I2. Dans ce cas-là, il s'agit de désactiver la deuxième sortie de contrôle C2 avant le test puis de la réactiver après le test.

Il faut noter qu'un test de court-circuit peut être également mis en œuvre entre les deux sorties de contrôle C1, C2. Tant que le test est positif (court-circuit entre les deux sorties), le démarrage est impossible.

En complément, il est également possible de tester le deuxième contact redondant AU_2 en activant la sortie de contrôle C2 et en surveillant l'état de la deuxième entrée de contrôle I2. Si le chemin entre C2 et I2 est fermé, cela signifie que le contact redondant AU_2 est bien fermé.

Lors de la surveillance de la boucle de démarrage, il est également possible de détecter un possible court-circuit au niveau du bouton de démarrage SW, une fois celui-ci relâché.

Par la configuration de câblage particulière et l'ajout d'un module de test particulier dans l'unité de commande et de traitement du détecteur, il est possible d'ajouter au système la fonctionnalité arrêt d'urgence, en employant un détecteur qui ne comporte que huit bornes de connexion.

L'invention présente de nombreux avantages, parmi lesquels :
- Une solution simple à mettre en œuvre pour ajouter une fonction arrêt d'urgence dans un système de détection de sécurité ;
- Une solution permettant de s'affranchir de l'emploi d'un bloc logique de sécurité, la fonction de gestion de l'arrêt d'urgence étant mise en œuvre par le détecteur ;
- Une solution qui permet de rester dans l'encombrement initial à uniquement huit bornes du détecteur.

## Revendications

1. Détecteur de sécurité (20) comprenant un module de détection (IN) configuré pour lire en entrée un signal de commande (S_IN), ledit détecteur comportant deux bornes d'alimentation, une première entrée de contrôle (I1) et une première sortie de contrôle (C1), une première sortie de sécurité (OSSD1) et une deuxième sortie de sécurité (OSSD2), et une première borne libre et une deuxième borne libre, **caractérisé en ce qu'**il comporte :
- Une deuxième entrée de contrôle (I2) connectée sur la première borne libre et une deuxième sortie de contrôle (C2) connectée sur la deuxième borne libre,
- Un module de test configuré pour appliquer une première séquence de test comprenant une désactivation de la première sortie de contrôle (C1), un test d'une boucle de démarrage (B_ST) connectée entre la deuxième sortie de contrôle (C2) et la première entrée de contrôle (I1) et/ou une deuxième séquence de test comprenant une désactivation de la deuxième sortie de contrôle (C2), un test d'une boucle de démarrage (B_ST) connectée entre la première sortie de contrôle (C1) et la deuxième entrée de contrôle (I2).

2. Détecteur selon la revendication 1, **caractérisé en ce que** le module de test est configuré pour effectuer une troisième séquence de test comprenant une activation de la deuxième sortie de contrôle (C2) et une lecture de l'état de la deuxième entrée de contrôle (I2).

3. Détecteur selon la revendication 1 ou 2, **caractérisé en ce que** le module de test est configuré pour effectuer une quatrième séquence de test comprenant une lecture de l'état de la première sortie de contrôle (C1) et de l'état de la deuxième sortie de contrôle (C2).

4. Détecteur selon l'une des revendications 1 à 3, **caractérisé en ce qu'**il comporte une unité de commande et de traitement (UC) configurée pour exécuter ledit module de test.

5. Détecteur selon la revendication 4, **caractérisé en ce que** l'unité de commande et de traitement (UC) est configurée pour exécuter :
- Un module de lecture de l'état de chaque entrée de contrôle (I1, I2) ;
- Un module de détermination d'un état de fonctionnement tenant compte de l'état de ses entrées de contrôle ;
- Un ou plusieurs modules de commande de ses sorties de sécurité (OSSD1, OSSD2) et de ses sorties de contrôle (C1, C2), selon l'état de fonctionnement déterminé.

6. Détecteur de sécurité selon l'une des revendications 1 à 5, **caractérisé en ce qu'**il est de type sans contact et **en ce que**, il comporte :
- Un capteur (30) et un transpondeur (1) appairé audit capteur (30),
- Le signal de commande (S_IN) est modifié lorsque ledit transpondeur est présent dans une zone de détection du capteur (30).

7. Détecteur de sécurité selon l'une des revendications 1 à 5, **caractérisé en ce qu'**il est de type barrière lumineuse (100) et **en ce que** le signal de commande (S_IN) est modifié par passage à travers ladite barrière lumineuse.

8. Détecteur de sécurité selon l'une des revendications 1 à 5, **caractérisé en ce qu'**il est de type à actionnement par câble (10) et **en ce que** le signal de commande (S_IN) est modifié par traction dudit câble.

9. Système de détection de sécurité, comprenant un détecteur de sécurité (20) tel que défini dans l'une des revendications 1 à 8, un dispositif d'arrêt d'urgence (AU) à deux contacts redondants (AU_1, AU_2) et une boucle de démarrage (B_ST), **caractérisé en ce que** :
- La boucle de démarrage (B_ST) est connectée entre la première sortie de contrôle (C1) et la deuxième sortie de contrôle (C2) du détecteur de sécurité ;
- Un premier contact redondant (AU_1) du dispositif d'arrêt d'urgence est connecté entre la première entrée de contrôle (I1) et la première sortie de contrôle (C1) et le deuxième contact redondant (AU_2) du dispositif d'arrêt d'urgence est connecté entre la deuxième entrée de contrôle (I2) et la deuxième sortie de contrôle (C2).

10. Système selon la revendication 9, **caractérisé en ce que** la boucle de démarrage (B_ST) comporte un bouton-poussoir de démarrage (SW).

11. Système selon la revendication 10, **caractérisé en ce que** la boucle de démarrage (B_ST) comporte deux contacts (K11, K12) normalement fermés de deux contacteurs (K1, K2) de commande d'une installation à commander.

12. Procédé de commande mis en œuvre dans un détecteur de sécurité employé dans un système de détection de sécurité conforme à l'une des revendications 9 à 11, **caractérisé en ce qu'**il comporte une première séquence de test qui comporte des étapes :
- Désactivation de la première sortie de contrôle (C1) du détecteur (20) ;
- Test de l'état de la boucle de démarrage (B_ST) en activant la deuxième sortie de contrôle (C2) et en lisant l'état de la première entrée de contrôle (I1) du détecteur (20) ;
Et/ou une deuxième séquence de test qui comporte des étapes de :
- Désactivation de la deuxième sortie de contrôle (C2) du détecteur (20) ;
- Test de l'état de la boucle de démarrage (B_ST) en activant la première sortie de contrôle (C1) et en lisant l'état de la deuxième entrée de contrôle (I2) du détecteur (20).

13. Procédé selon la revendication 12, **caractérisé en ce que** l'étape de test est mise en œuvre plusieurs fois tant que la première entrée de contrôle (I1) ne devient pas active lors de ladite première séquence de test et/ou tant que la deuxième entrée de contrôle (I2) ne devient pas active lors de la deuxième séquence de test.

14. Procédé selon la revendication 12 ou 13, **caractérisé en ce qu'**il comporte une étape de démarrage par activation des sorties de sécurité (OSSD1, OSSD2) et une étape de réactivation de la première sortie de contrôle (C1) pour la première séquence de test.

15. Procédé selon la revendication 12 ou 13, **caractérisé en ce qu'**il comporte une étape de démarrage par activation des sorties de sécurité (OSSD1, OSSD2) et une étape de réactivation de la deuxième sortie de contrôle (C2) pour la deuxième séquence de test.

16. Procédé selon la revendication 14 ou 15, **caractérisé en ce qu'**il comporte, après ladite étape de démarrage, une étape de surveillance du premier contact redondant (AU_1) du dispositif d'arrêt d'urgence (AU) entre la première entrée de contrôle (I1) et la première sortie de contrôle (C1) et de surveillance du deuxième contact redondant (AU_2) du dispositif d'arrêt d'urgence (AU) entre la deuxième entrée de contrôle (I2) et la deuxième sortie de de contrôle (C2).

17. Utilisation du système de détection de sécurité tel que défini dans l'une des revendications 9 à 11 pour surveiller le démarrage d'une installation électrique protégée par un dispositif comprenant une partie fixe sur laquelle est fixé un capteur (30) du détecteur de sécurité (20) et une partie mobile sur laquelle est fixé un transpondeur (1) du détecteur de sécurité (20).

## Patentansprüche

1. Sicherheitsdetektor (20), der ein Erfassungsmodul (IN) enthält, das konfiguriert ist, am Eingang ein Steuersignal (S_IN) zu lesen, wobei der Detektor zwei Versorgungsklemmen, einen ersten Kontrolleingang (I1) und einen ersten Kontrollausgang (C1), einen ersten Sicherheitsausgang (OSSD1) und einen zweiten Sicherheitsausgang (OSSD2), und eine erste freie Klemme und eine zweite freie Klemme aufweist, **dadurch gekennzeichnet, dass** er aufweist:
- einen mit der ersten freien Klemme verbundenen zweiten Kontrolleingang (I2) und einen mit der zweiten freien Klemme verbundenen zweiten Kontrollausgang (C2),
- ein Testmodul, das konfiguriert ist, eine erste Testfolge, die eine Deaktivierung des ersten Kontrollausgangs (C1), einen Test einer Startschleife (B_ST), die zwischen dem zweiten Kontrollausgang (C2) und dem ersten Kontrolleingang (I1) verbunden ist, enthält, und/oder eine zweite Testfolge anzuwenden, die eine Deaktivierung des zweiten Kontrollausgangs (C2), einen Test einer Startschleife (B_ST) enthält, die zwischen dem ersten Kontrollausgang (C1) und dem zweiten Kontrolleingang (I2) verbunden ist.

2. Detektor nach Anspruch 1, **dadurch gekennzeichnet, dass** das Testmodul konfiguriert ist, eine dritte Testfolge auszuführen, die eine Aktivierung des zweiten Kontrollausgangs (C2) und ein Ablesen des Zustands des zweiten Kontrolleingangs (I2) enthält.

3. Detektor nach Anspruch 1 oder 2, **dadurch gekennzeichnet, dass** das Testmodul konfiguriert ist, eine vierte Testfolge auszuführen, die ein Ablesen des Zustands des ersten Kontrollausgangs (C1) und des Zustands des zweiten Kontrollausgangs (C2) enthält.

4. Detektor nach einem der Ansprüche 1 bis 3, **dadurch gekennzeichnet, dass** er eine Steuer- und Verarbeitungseinheit (UC) aufweist, die konfiguriert ist, das Testmodul auszuführen.

5. Detektor nach Anspruch 4, **dadurch gekennzeichnet, dass** die Steuer- und Verarbeitungseinheit (UC) konfiguriert ist, auszuführen:
- ein Modul zum Ablesen des Zustand jedes Kontrolleingangs (I1, I2) ;
- ein Modul zur Bestimmung eines Betriebszustands unter Berücksichtigung des Zustands seiner Kontrolleingänge;
- ein oder mehrere Steuermodule seiner Sicherheitsausgänge (OSSD1, OSSD2) und seiner Kontrollausgänge (C1, C2), gemäß dem bestimmten Betriebszustand.

6. Sicherheitsdetektor nach einem der Ansprüche 1 bis 5, **dadurch gekennzeichnet, dass** er vom kontaktlosen Typ ist und dass er aufweist:
- einen Sensor (30) und einen an den Sensor (30) angepassten Transponder (1),
- das Steuersignal (S_IN) wird verändert, wenn der Transponder in einer Erfassungszone des Sensors (30) vorhanden ist.

7. Sicherheitsdetektor nach einem der Ansprüche 1 bis 5, **dadurch gekennzeichnet, dass** er vom Typ Lichtschranke (100) ist, und dass das Steuersignal (S_IN) durch Durchgang durch die Lichtschranke verändert wird.

8. Sicherheitsdetektor nach einem der Ansprüche 1 bis 5, **dadurch gekennzeichnet, dass** er von der Art mit Betätigung durch Kabel (10) ist, und dass das Steuersignal (S_IN) durch Zug am Kabel verändert wird.

9. Sicherheitsdetektorsystem, das einen Sicherheitsdetektor (20) wie in einem der Ansprüche 1 bis 8 definiert, eine Nothaltevorrichtung (AU) mit zwei redundanten Kontakten (AU_1, AU_2) und eine Startschleife (B_ST) enthält, **dadurch gekennzeichnet, dass**:
- die Startschleife (B_ST) zwischen dem ersten Kontrollausgang (C1) und dem zweiten Kontrollausgang (C2) des Sicherheitsdetektors verbunden ist;
- ein erster redundanter Kontakt (AU_1) der Nothaltevorrichtung zwischen dem ersten Kontrolleingang (I1) und dem ersten Kontrollausgang (C1) verbunden ist, und der zweite redundante Kontakt (AU_2) der Nothaltevorrichtung zwischen dem zweiten Kontrolleingang (I2) und dem zweiten Kontrollausgang (C2) verbunden ist.

10. System nach Anspruch 9, **dadurch gekennzeichnet, dass** die Startschleife (B_ST) einen Startknopf (SW) aufweist.

11. System nach Anspruch 10, **dadurch gekennzeichnet, dass** die Startschleife (B_ST) zwei normalerweise geschlossene Kontakte (K11, K12) von zwei Steuerschützen (K1, K2) einer zu steuernden Anlage aufweist.

12. Steuerverfahren, das in einem Sicherheitsdetektor durchgeführt wird, der in einem Sicherheitserfassungssystem nach einem der Ansprüche 9 bis 11 verwendet wird, **dadurch gekennzeichnet, dass** es eine erste Testfolge aufweist, die Schritte aufweist:
- der Deaktivierung des ersten Kontrollausgangs (C1) des Detektors (20) ;
- des Tests des Zustands der Startschleife (B_ST) durch Aktivieren des zweiten Kontrollausgangs (C2) und durch Ablesen des Zustands des ersten Kontrolleingangs (I1) des Detektors (20);
und/oder eine zweite Testfolge, die Schritte aufweist:
- der Deaktivierung des zweiten Kontrollausgangs (C2) des Detektors (20);
- des Tests des Zustands der Startschleife (B_ST) durch Aktivieren des ersten Kontrollausgangs (C1) und durch Ablesen des Zustands des zweiten Kontrolleingangs (I2) des Detektors (20).

13. Verfahren nach Anspruch 12, **dadurch gekennzeichnet, dass** der Testschritt mehrfach durchgeführt wird, solange der erste Kontrolleingang (I1) bei der ersten Testfolge nicht aktiv wird und/oder so lange der zweite Kontrolleingang (I2) bei der zweiten Testfolge nicht aktiv wird.

14. Verfahren nach Anspruch 12 oder 13, **dadurch gekennzeichnet, dass** es einen Startschritt durch Aktivierung der Sicherheitsausgänge (OSSD1, OSSD2) und einen Reaktivierungsschritt des ersten Kontrollausgangs (C1) für die erste Testfolge aufweist.

15. Verfahren nach Anspruch 12 oder 13, **dadurch gekennzeichnet, dass** es einen Startschritt durch Aktivierung der Sicherheitsausgänge (OSSD1, OSSD2) und einen Reaktivierungsschritt des zweiten Kontrollausgangs (C2) für die zweite Testfolge aufweist.

16. Verfahren nach Anspruch 14 oder 15, **dadurch gekennzeichnet, dass** es nach dem Startschritt einen Schritt der Überwachung des ersten redundanten Kontakts (AU_1) der Nothaltevorrichtung (AU) zwischen dem ersten Kontrolleingang (I1) und dem ersten Kontrollausgang (C1) und der Überwachung des zweiten redundanten Kontakts (AU_2) der Nothaltevorrichtung (AU) zwischen dem zweiten Kontrolleingang (I2) und dem zweiten Kontrollausgang (C2) aufweist.

17. Verwendung des Sicherheitserfassungssystems, wie in einem der Ansprüche 9 bis 11 definiert, zur Überwachung des Starts einer elektrischen Anlage, die von einer Vorrichtung geschützt wird, die einen ortsfesten Teil, an dem ein Sensor (30) des Sicherheitsdetektors (20) befestigt ist, und einen beweglichen Teil enthält, an dem ein Transponder (1) des Sicherheitsdetektors (20) befestigt ist.

## Claims

1. Safety detector (20) comprising a detection module (IN) configured for reading a control signal (S_IN) at the input, said detector comprising two supply terminals, a first control input (I1) and a first control output (C1), a first safety output (OSSD1) and a second safety output (OSSD2), and a first free terminal and a second free terminal, **characterized in that** it comprises:
- A second control input (12) connected to the first free terminal and a second control output (C2) connected to the second free terminal,
- A test module configured for applying a first test sequence comprising a disabling of the first control output (C1) and a test of a start loop (B_ST) connected between the second control output (C2) and the first control input (11) and/or a second test sequence comprising a disabling of the second control output (C2) and a test of a start loop (B_ST) connected between the first control output (C1) and the second control input (12).

2. Detector according to Claim 1, **characterized in that** the test module is configured for carrying out a third test sequence comprising an enabling of the second control output (C2) and a read of the status of the second control input (12).

3. Detector according to either of Claims 1 and 2, **characterized in that** the test module is configured for carrying out a fourth test sequence comprising a read of the status of the first control output (C1) and of the status of the second control output (C2).

4. Detector according to one of Claims 1 to 3, **characterized in that** it comprises a control and processing unit (UC) configured for running said test module.

5. Detector according to Claim 4, **characterized in that** the control and processing unit (UC) is configured for running:
- A module for reading the status of each control input (11, 12);
- A module for determining an operational state taking into account the status of its control inputs;
- One or more modules for controlling its safety outputs (OSSD1, OSSD2) and its control outputs (C1, C2), according to the determined operational state.

6. Safety detector according to one of Claims 1 to 5, **characterized in that** it is of the contactless type and **in that** it comprises:
- A sensor (30) and a transponder (1) paired to said sensor (30),
- The control signal (S_IN) being modified when said transponder is present in a detection area of the sensor (30).

7. Safety detector according to one of Claims 1 to 5, **characterized in that** it is of the light barrier type (100) and **in that** the control signal (S_IN) is modified by passing through said light barrier.

8. Safety detector according to one of Claims 1 to 5, **characterized in that** it is of the actuation by cable type (10) and **in that** the control signal (S_IN) is modified by traction of said cable.

9. Safety detection system, comprising a safety detector (20) such as defined in one of Claims 1 to 8, an emergency stop device (AU) with two redundant contacts (AU_1, AU_2) and a start loop (B_ST), **characterized in that**:
- The start loop (B_ST) is connected between the first control output (C1) and the second control output (C2) of the safety detector;
- A first redundant contact (AU_1) of the emergency stop device is connected between the first control input (11) and the first control output (C1) and the second redundant contact (AU_2) of the emergency stop device is connected between the second control input (12) and the second control output (C2).

10. System according to Claim 9, **characterized in that** the start loop (B_ST) comprises a start push-button (SW).

11. System according to Claim 10, **characterized in that** the start loop (B_ST) comprises two normally-closed contacts (K11, K12) of two control contactors (K1, K2) of an installation to be controlled.

12. Control method implemented in a safety detector employed in a safety detection system according to one of Claims 9 to 11, **characterized in that** it comprises a first test sequence which comprises steps for:
- Disabling the first control output (C1) of the detector (20);
- Testing the status of the start loop (B_ST) by enabling the second control output (C2) and by reading the status of the first control input (11) of the detector (20);
And/or a second test sequence which comprises steps for:
- Disabling the second control output (C2) of the detector (20);
- Testing the status of the start loop (B_ST) by enabling the first control output (C1) and by reading the status of the second control input (12) of the detector (20).

13. Method according to Claim 12, **characterized in that** the test step is implemented several times for as long as the first control input (11) has not been enabled during said first test sequence and/or for as long as the second control input (12) has not been enabled during the second test sequence.

14. Method according to either of Claims 12 and 13, **characterized in that** it comprises a step for starting by enabling safety outputs (OSSD1, OSSD2) and a step for re-enabling the first control output (C1) for the first test sequence.

15. Method according to either of Claims 12 and 13, **characterized in that** it comprises a step for starting by enabling safety outputs (OSSD1, OSSD2) and a step for re-enabling the second control output (C2) for the second test sequence.

16. Method according to either of Claims 14 and 15, **characterized in that** it comprises, after said start step, a step for monitoring the first redundant contact (AU_1) of the emergency stop device (AU) between the first control input (11) and the first control output (C1) and for monitoring the second redundant contact (AU_2) of the emergency stop device (AU) between the second control input (12) and the second control output (C2).

17. Use of the safety detection system such as defined in one of Claims 9 to 11 for monitoring the start of an electrical installation protected by a device comprising a fixed part onto which a sensor (30) of the safety detector (20) is fixed and a mobile part onto which a transponder (1) of the safety detector (20) is fixed.
